# EUROPEAN PATENT APPLICATION

(11) **EP 4 685 684 A1**
(43) Date of publication of application: **28.01.2026**
(21) Application number: 23934441.9
(22) Date of filing: 25.04.2023
(51) Int. Cl.: G06F 30/20, G06Q 50/04

(54) **DISTRIBUTED COLLABORATIVE SIMULATION METHOD AND SYSTEM, ELECTRONIC DEVICE, AND READABLE MEDIUM**

(71) Applicant: Siemens Aktiengesellschaft, 80333 München (DE)
(72) Inventor: XU, Weifeng, Shanghai 200082 (CN); SHEN, Yixuan, Shanghai 200082 (CN)
(74) Representative: Isarpatent
(86) International application number: PCT/CN2023/090651
(87) International publication number: WO 2024/221236

(57) **Abstract**

A distributed collaborative simulation method, comprising: extracting, by a first emulator among a first group of emulators, model data of one of a plurality of production units in a first scenario, to generate a first list file; respectively generating a plurality of first list files for the plurality of production units; extracting, by a second emulator, model data of a production line in the first scenario, to generate a second list file; matching production unit names in the plurality of first list files with production unit names in the second list file; adding, to the second list file, information of the first emulator corresponding to the production unit name in the first list file; respectively mapping, to control signals corresponding to the first list file corresponding to a first production unit, control signals associated with a first production unit name among a plurality of production unit names in a joint simulation list; and controlling execution of the first emulator and the second emulator according to the joint simulation list, so that the first emulator and the second emulator respectively output simulation results to a visualization tool.

## Description

### TECHNICAL FIELD

Embodiments of the present application mainly relate to the field of simulation, and in particular, to a distributed collaborative simulation method and system, an electronic device, and a readable medium.

### BACKGROUND

With the continuous improvement of the automation degree of industrial production, modeling and simulation of advanced automation devices and industrial automation systems are increasingly popular. In addition, as an industrial production process becomes increasingly complex, digital twin modeling and simulation technologies are widely used to reduce engineering time, optimize a production design, and improve production efficiency. The digital twin modeling and simulation technologies have become key technologies for future industry automation development. However, modeling and simulation of different production units in the industrial production process may involve many different suppliers. How to integrate independently running simulators provided by different suppliers into simulation of a unified industrial automatic production line is a great challenge in future industrial automation development.

### SUMMARY

Embodiments of the present application provide a distributed collaborative simulation method and system, an electronic device, and a readable medium. In the embodiments of the present application, while it is ensured that different simulators respectively run normally in a scenario, interconnection and collaborative running between the different simulators are implemented, and corresponding simulation results can be respectively quickly and stably outputted to a visualization tool for three-dimensional presentation.

A first aspect provides a distributed collaborative simulation method, including: extracting, by a first simulator in a first group of simulators, model data of one of a plurality of production units in a first scenario to generate a first list file; respectively generating a plurality of first list files for the plurality of production units; extracting, by a second simulator, model data of a production line in the first scenario to generate a second list file; performing, in the second list file, matching on names of the production units in the plurality of first list files; adding information of first simulators corresponding to the names of the production units in the first list files into the second list file to obtain a joint simulation list; respectively mapping a control signal associated with a name of a first production unit among the names of the plurality of production units in the joint simulation list to a corresponding control signal in a first list file corresponding to the first production unit; and controlling execution of the first simulator and the second simulator based on the joint simulation list, to cause the first simulator and the second simulator to respectively output simulation results to a visualization tool.

A second aspect provides a distributed collaborative simulation system, including: a first group of simulators including at least one first simulator, where each first simulator is configured to: extract model data of one of a plurality of production units in a first scenario, to generate a first list file; respectively generate a plurality of first list files for the plurality of production units; and back up the plurality of first list files into a database; a second simulator, configured to: extract model data of a production line in the first scenario, to generate a second list file, and back up the second list file into the database; the database, configured to: perform, in the second list file, matching on names of the production units in the plurality of first list files, add information of first simulators corresponding to the names of the production units in the first list files into the second list file to obtain a joint simulation list, and transmit the joint simulation list to a simulation signal gateway; and a simulation signal gateway, configured to: respectively map a control signal associated with a name of a first production unit among the names of the plurality of production units in the joint simulation list to a corresponding control signal in a first list file, which corresponds to the first production unit, in the first simulator; and control execution of the first simulator and the second simulator based on the joint simulation list, to cause the first simulator and the second simulator to respectively output simulation results to a visualization tool.

A third aspect provides an electronic device, including at least one memory, configured to store a computer-readable code; and at least one processor, configured to invoke the computer-readable code to perform the steps in the method provided in the first aspect.

A fourth aspect provides a computer-readable medium, having a computer-readable instruction stored therein. The computer-readable instruction, when executed by a processor, causes the processor to perform the steps in the method provided in the first aspect.

### BRIEF DESCRIPTION OF THE DRAWINGS

The following accompanying drawings are only intended to make schematic description and explanation to the embodiments of the present application, but are not intended to limit a scope of the embodiments of the present application. Where:
FIG. 1 is a flowchart of a distributed collaborative simulation method according to an embodiment of the present application;
FIG. 2 is a schematic diagram of a distributed collaborative simulation system according to an embodiment of the present application; and
FIG. 3 is a schematic diagram of an electronic apparatus according to an embodiment of the present application.

### Descriptions of reference numerals:

| | | | | | |
|---|---|---|---|---|---|
| 100: | distributed collaborative | 101 to 106: | method steps simulation method | | |
| 20: | distributed collaborative | 211: | first simulator | 22: | second simulator simulation system |
| 23: | database | 24: | simulation signal gateway | 25: | visualization tool |
| 300: | electronic device | 301: | memory | 302: | processor |

### DETAILED DESCRIPTION

Now, the subject described herein is discussed with reference to example implementations. It should be understood that, discussion of these implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of the present application. Various processes or components may be omitted, replaced, or added in the various examples according to needs. For example, the described method may be performed according to a sequence different from the sequence described herein, and all steps may be added, omitted, or combined. In addition, features described in some examples may alternatively be combined in other examples.

The term "include" and variants thereof used herein indicate open terms, that is, "include but not limited to". The term "based on" is "based at least in part on". The terms "one embodiment" and "an embodiment" represent "at least one embodiment". The term "another embodiment" is understood as "at least one embodiment". The terms "first", "second", and the like may represent different objects or the same object. Other definitions may be included explicitly or implicitly in the following. Unless otherwise explicitly stated in the context, definitions of the same term are consistent throughout the entire specification.

The following describes the embodiments of the present application with reference to the accompanying drawings.

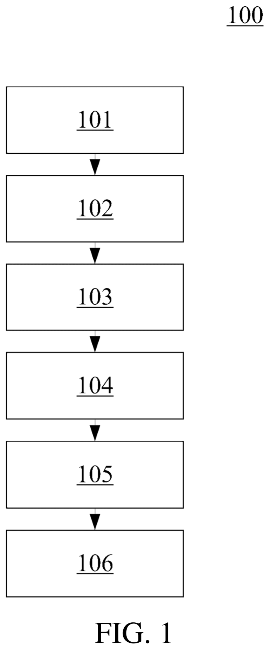

FIG. 1 is a flowchart of a distributed collaborative simulation method according to an embodiment of the present application. As shown in FIG. 1, the distributed collaborative simulation method 100 includes:
Step 101: Extract, by a first simulator in a first group of simulators, model data of one of a plurality of production units in a first scenario to generate a first list file, and respectively generate a plurality of first list files for the plurality of production units.

The model data of the production unit includes: a control signal, a state signal, a name, and a name and interface information of a first simulator corresponding to the production unit. Optionally, the model data also possibly includes a geometric dimension, material information, and the like of the production unit. The model data of the production line includes: a control signal, a name, a name and interface information of the second simulator, and names and position information of all production units in the production line.

Optionally, there may be one or more first simulators in the first group of simulators.

Optionally, the first simulator may be configured for simulation of a conventional single production unit, such as robot simulation and mechanical motion simulation, or may be a simulator of a production unit having an autonomous system, for example, for autonomous mobile robot simulation and artificial intelligence (AI) visual robot simulation.

Step 102: Extract, by a second simulator, model data of a production line in the first scenario to generate a second list file. Optionally, the second simulator has functions such as production process modeling and event-triggered simulation, and simulates the production line through a given production simulation input and condition.

Optionally, corresponding model data is extracted, and a structured data file in, for example, a json or xml format may be generated.

Step 103: Perform, in the second list file, matching on names of the production units in the plurality of first list files.

Optionally, the names of the production units in the plurality of first list files may be matched in the second list file by using a natural language processing technology.

Step 104: Add information of first simulators corresponding to the names of the production units in the first list files into the second list file to obtain a joint simulation list.

The information of the first simulators at least includes: names and interface information of the first simulators.

Step 105: Respectively map a control signal associated with a name of a first production unit among the names of the plurality of production units in the joint simulation list to a corresponding control signal in a first list file corresponding to the first production unit.

Step 106: Control execution of the first simulator and the second simulator based on the joint simulation list, to cause the first simulator and the second simulator to respectively output simulation results to a visualization tool.

The simulation result outputted by the first simulator may include: position information of each object in each of the plurality of production units in the first scenario and a production index of the production unit. The simulation result outputted by the second simulator may include: position information of each production unit in the production line in the first scenario and a production index of the production line. The position information of each object not only includes coordinate information such as spatial coordinates and an orientation of a particular mechanical arm or a particular automation device relative to each production unit, and/or angle information such as an angle of a joint of a particular mechanical arm. The production index of the production unit is, for example, interference, running time, and a production rate. The position information of each production unit in the production line in the first scenario refers to coordinates and an orientation of the production unit relative to a space of the production line. A rectangular coordinate system is taken as an example, so that the position information is PositionXYZ and RotationXYZ. In addition, the production index of the production line includes, for example, a manufacturing cycle time (MCT), throughput, and overall equipment effectiveness (OEE).

Optionally, before step 106, signal interaction between the first simulator, the second simulator, and the visualization tool is established.

The embodiments of the present application extract the model data of different production units of different simulators and the model data of the production line in the first scenario, respectively generate corresponding list files, and then integrate related list files to obtain the joint simulation list. Then, the embodiments map control signals corresponding to related production units in the joint simulation list to original list files of the related production units, so that by loading the joint simulation list, the simulators corresponding to the related production units/production line can be controlled to collaboratively perform simulation, and transmit outputted simulation results to the visualization tool for synchronous visualization. In the embodiments of the present application, single-line simulation is performed after different models are integrated each time as in the existing art. In the embodiments of the present application, when it is ensured that different simulators respectively normally run in a scenario, interconnection and collaborative running between the different simulators are implemented. Related modeling and engineering work of different models in an alignment process are reduced. Meanwhile, it can ensure that different suppliers can cooperate easily, and simulation speeds of different simulators are greatly ensured, so that a user can be helped to find an abnormality in the production line more quickly, and verification and deployment of the production units can be accelerated.

In an embodiment, before the simulation results are outputted to the visualization tool, all three-dimensional models in the first group of simulators and the second simulator are extracted, to cause the visualization tool to be invokable. Optionally, after step 106, synchronous three-dimensional rendering is performed through the visualization tool. Specifically, corresponding three-dimensional models in the simulation results respectively outputted by the first simulator and the second simulator are invoked to obtain a first group of three-dimensional models. The synchronous three-dimensional rendering is performed through the visualization tool based on the simulation results and the first group of three-dimensional models.

In an embodiment, the first list file extracted from one first simulator 211 may be, for example:
a name of a first production unit, for example, Unit A
a name of the first simulator, for example, Psimulate1
interface information of the first simulator, for example, 127.0.0.1: 8082 a specific control signal.
The first list file extracted from another first simulator 212 may be, for example:
   a name of a first production unit, for example, Unit B
   a name of the first simulator, for example, Psimulate2
   interface information of the first simulator, for example, 168.192.1.36: 8081
      a specific control signal
   The second list file extracted from the second simulator may be, for example:
      a name of the production line, for example, Line A
      a name of the second simulator, for example, PlantSimation
      interface information of the second simulator, for example, 127.0.0.1: 8081
         a name of a first production unit: Unit A
         a position of the first production unit: 50,100
            a specific control signal.
         a name of a second production unit: Unit B;
         a position of the second production unit: 100,100
            a specific control signal.

The information of the first simulators corresponding to the names of the production units in the first list files include the name Psimulate1 of the first simulator 211 and the interface information 127.0. 0.1: 8082 of the first simulator 211, the name Psimulate2 of the first simulator 212 and the interface information 168.192. 1.36: 8081 of the first simulator 212 is added into the second list file, so as to obtain the joint simulation list, which may be, for example:
the name of the production line, for example, Line A
the name of the second simulator, for example, PlantSimation;
the interface information of the second simulator, for example, 127.0.0.1: 8081
   the name of the first production unit: Unit A
   the name of the first simulator, for example, Psimulate1
   the interface information of the first simulator, for example, 127.0.0.1: 8082
   the position of the first production unit: 50,100
      the specific control signal.
   the name of the second production unit: Unit B;
   the name of the first simulator, for example, Psimulate2
   the interface information of the first simulator, for example, 168.192.1.36: 8081
   the position of the second production unit: 100,100
      the specific control signal.

In the foregoing manner, the names and interface information of the simulators respectively corresponding to the production line and the production units that are in the first scenario are integrated into one list, to rapidly cooperate with the model data of different production units and the model data of the production line.

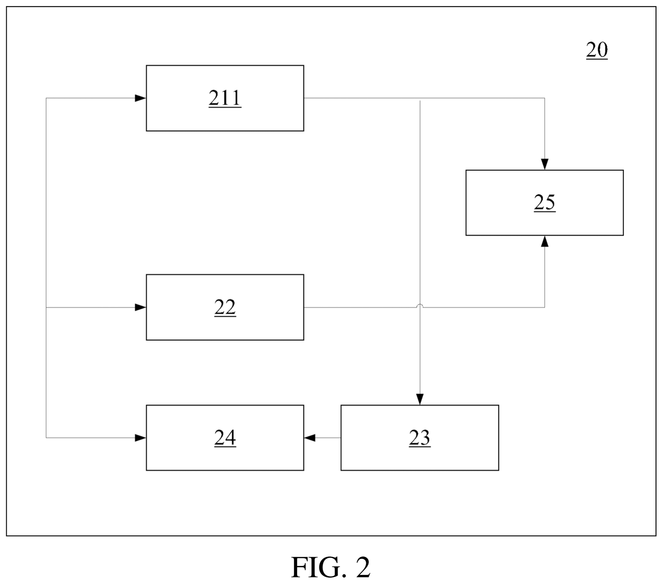

FIG. 2 is a schematic diagram of a distributed collaborative simulation system 20 according to an embodiment of the present application. As shown in FIG. 2, the distributed collaborative simulation system 20 includes:
a first group of simulators including at least one first simulator, where each first simulator 211 is configured to: extract model data of one of a plurality of production units in a first scenario, to generate a first list file; respectively generate a plurality of first list files for the plurality of production units; and back up the plurality of first list files into a database 23;
a second simulator 22, configured to: extract model data of a production line in the first scenario, to generate a second list file, and back up the second list file into the database 23;
the database 23, configured to: perform, in the second list file, matching on names of the production units in the plurality of first list files, add information of first simulators corresponding to the names of the production units in the first list files into the second list file to obtain a joint simulation list, and transmit the joint simulation list to a simulation signal gateway 24; and
the simulation signal gateway 24, configured to: respectively map a control signal associated with a name of a first production unit among the names of the plurality of production units in the joint simulation list to a corresponding control signal in a first list file, which corresponds to the first production unit, in the first simulator 211; and control execution of the first simulator 211 and the second simulator 22 based on the joint simulation list, to cause the first simulator 211 and the second simulator 22 to respectively output simulation results to a visualization tool 25. Thus, the visualization tool 25 performs three-dimensional rendering while receiving the simulation results of the first group of simulators and the second simulator.

In the embodiments of the present application, while it is ensured that different simulators respectively run normally in a scenario, interconnection and collaborative running between the different simulators are further implemented, and a corresponding simulation result are respectively quickly and stably outputted to a visualization tool for three-dimensional presentation.

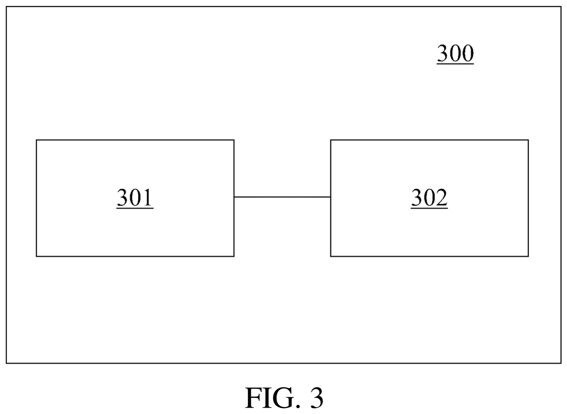

An embodiment of the present application further provides an electronic device 300. FIG. 3 is a schematic diagram of an electronic device 300 according to an embodiment of the present application. As shown in FIG. 3, the electronic device 300 includes a processor 302 and a memory 301. The memory 301 stores an instruction, and the instruction, when executed by the processor 302, implements the method 100 described above.

At least one processor 302 may include a microprocessor, an application-specific integrated circuit (ASIC), a digital signal processor (DSP), a central processing unit (CPU), a graphics processing unit (GPU), a state machine, and the like. An embodiment of a computer-readable medium includes, but is not limited to, a floppy disk, a compact disc-read only memory (CD-ROM), a magnetic disc, a memory chip, a read-only memory ROM, a random access memory (RAM), an ASIC, a configured processor, an all-optical medium, all magnetic tapes or other magnetic media, or any other media from which a computer processor can read an instruction. In addition, computer-readable media in various other forms may transmit or carry instructions to a computer, including a router, a private or public network, or other wired or wireless transmission devices or channels. The instruction may include a code of any computer programming language, including C, C ++, C language, Visual Basics java, and JavaScript.

In addition, an embodiment of the present application further provides a computer-readable medium, having a computer-readable instruction. The computer-readable instruction, when executed by a processor, causes the processor to perform the foregoing distributed collaborative simulation method. An embodiment of the computer-readable medium includes a floppy disk, a hard disk drive, a magneto-optical disc, an optical disc (such as a CD-ROM, a CD-R, a CD-RW, a DVD-ROM, a DVD-RAM, a DVD-RW, or a DVD + RW), a magnetic tape, a non-volatile storage card, and a ROM. Optionally, the computer-readable instruction may be downloaded from a server computer or a cloud through a communication network.

It should be noted that not all steps and modules in the foregoing procedures and system structural diagrams are necessary, and some steps or modules may be omitted according to actual needs. An execution sequence of the steps is not fixed, and may be adjusted according to needs. The system structures described in the foregoing embodiments may be physical structures, or may be logical structures. That is, some modules may be implemented by the same physical entity, or some modules may be separately implemented by a plurality of physical entities, or may be jointly implemented by some components in a plurality of independent devices.

## Claims

1. A distributed collaborative simulation method, comprising:
extracting (101),by a first simulator in a first group of simulators, model data of one of a plurality of production units in a first scenario to generate a first list file; respectively generating a plurality of first list files for the plurality of production units;
extracting (102), by a second simulator, model data of a production line in the first scenario to generate a second list file;
performing, in the second list file, matching (103) on names of the production units in the plurality of first list files;
adding (104) information of first simulators corresponding to the names of the production units in the first list files into the second list file to obtain a joint simulation list;
respectively mapping (105) a control signal associated with a name of a first production unit among the names of the plurality of production units in the joint simulation list to a corresponding control signal in a first list file corresponding to the first production unit; and
controlling (106) execution of the first simulator and the second simulator based on the joint simulation list, to cause the first simulator and the second simulator to respectively output simulation results to a visualization tool.

2. The method according to claim 1, wherein
the model data of the production unit comprises:
a control signal, a state signal, a name, and a name and interface information of a first simulator corresponding to the production unit; and
the model data of the production line comprises:
a control signal, a name, a name and interface information of the second simulator, and names and position information of all production units in the production line.

3. The method according to claim 1, wherein before the controlling (106) execution of the first simulator and the second simulator based on the joint simulation list, to cause the first simulator and the second simulator to respectively output simulation results to a visualization tool, the method further comprises:
establishing signal interaction between the first simulator, the second simulator, and the visualization tool.

4. The method according to claim 1, wherein before the simulation results are outputted to the visualization tool, the method further comprises:
extracting all three-dimensional models in the first group of simulators and the second simulator, to cause the visualization tool to be invokable.

5. The method according to claim 1, wherein after the controlling (106) execution of the first simulator and the second simulator based on the joint simulation list, to cause the first simulator and the second simulator to respectively output simulation results to a visualization tool, the method further comprises:
performing synchronous three-dimensional rendering through the visualization tool.

6. The method according to claim 5, wherein the performing synchronous three-dimensional rendering through the visualization tool comprises:
invoking corresponding three-dimensional models in the simulation results respectively outputted by the first simulator and the second simulator, to obtain a first group of three-dimensional models; and
performing the synchronous three-dimensional rendering through the visualization tool based on the simulation results and the first group of three-dimensional models.

7. The method according to claim 1, wherein
the simulation result outputted by the first simulator comprises:
position information of each object in each of the plurality of production units in the first scenario and a production index of the production unit;
the simulation result outputted by the second simulator comprises:
position information of each production unit in the production line in the first scenario and a production index of the production line.

8. A distributed collaborative simulation system, comprising:
a first group of simulators comprising at least one first simulator, wherein each first simulator (211) is configured to:
extract model data of one of a plurality of production units in a first scenario, to generate a first list file;
respectively generate a plurality of first list files for the plurality of production units; and
back up the plurality of first list files into a database (23);
a second simulator (22), configured to:
extract model data of a production line in the first scenario, to generate a second list file, and back up the second list file into the database (23);
the database (23), configured to:
perform, in the second list file, matching on names of the production units in the plurality of first list files, add information of first simulators corresponding to the names of the production units in the first list files into the second list file to obtain a joint simulation list, and
transmit the joint simulation list to a simulation signal gateway (24); and
a simulation signal gateway (24), configured to:
respectively map a control signal associated with a name of a first production unit among the names of the plurality of production units in the joint simulation list to a corresponding control signal in a first list file, which corresponds to the first production unit, in the first simulator (211); and
control execution of the first simulator (211) and the second simulator (22) based on the joint simulation list, to cause the first simulator (211) and the second simulator (22) to respectively output simulation results to a visualization tool (25).

9. An electronic device, comprising:
at least one memory (301), configured to store a computer-readable code; and
at least one processor (302), configured to invoke the computer-readable code to perform the steps in the method according to any one of claims 1 to 7.

10. A computer-readable medium, having a computer-readable instruction stored therein, wherein the computer-readable instruction, when executed by a processor, causes the processor to perform the steps in the method according to any one of claims 1 to 7.
